# EUROPÄISCHE PATENTANMELDUNG

(11) **EP 1 137 137 A1**
(43) Veröffentlichungstag der Anmeldung: **26.09.2001**
(21) Anmeldenummer: 01106576.0
(22) Anmeldetag: 15.03.2001
(51) Int. Cl.: H02B 1/32, H02B 1/21

(54) **Adapter für einen Schaltschrank**

(30) Priorität: 17.03.2000 DE 10013112
(71) Anmelder: AEG Niederspannungstechnik GmbH & Co. KG, 24534 Neumünster (DE)
(72) Erfinder: Petersen, Ulrich, 24229 Dänischenhagen (DE); Grimm, Jörn, 24253 Prasdorf (DE); Hagen, Andreas, 24638 Schmalensee (DE); Spöring, Marion, 24539 Neumünster (DE)
(74) Vertreter: Leson, Thomas Johannes Alois, Dipl.-Ing.

(57) **Zusammenfassung**

Gezeigt wird ein Adapter 15 für einen Schaltschrank mit einem Rahmen 17, in dem eine Mehrzahl von Adaptersammelschienen 21 vertikal angeordnet sind, die sich im wesentlichen über die gesamte Höhe des Rahmens erstrecken. Dieser Adapter kann wie ein Einschub in einen Schaltschrank eingeschoben werden, woraufhin die entsprechenden Einschübe in derselben Art und Weise in den Adapter eingeschoben werden können, wie Einschube, die ohne Adapter in den Schaltschrank passen.

## Beschreibung

Die Erfindung bezieht sich auf einen Adapter für einen Schaltschrank wie er in Industrieanlagen, Kaufhäusern oder ähnlichen Anlagen zum Einsatz kommen kann. Schaltschränke dieser Art schalten, überwachen, schützen oder steuern Motoren, Lichtabgänge oder andere Verbraucher.

Diese Funktionen werden in den Schaltschränken von Einschüben ganz unterschiedlicher Art erfüllt. Die jeweiligen Einschübe unterscheiden sich insbesondere im Hinblick auf deren Höhe und Tiefe. Nur in seltenen Ausnahmefällen weisen alle in einem Schaltschrank einzubauenden Einschübe dieselbe Tiefe auf. Alle Einschübe sind jedoch mit an der Hinterseite des Schaltschrankes angeordneten Feldsammelschienen zu verbinden, die sich im allgemeinen senkrecht von oben bis unten durch den gesamten Schaltschrank erstrecken.

Um gleichzeitig Einschübe mit einer großen Tiefe und Einschübe mit einer geringeren Tiefe in demselben Schaltschrank anordnen zu können, ist daher im allgemeinen für jeden kleineren Einschub ein Adapter vorzusehen. Die Vorsehung eines Adapters für jeden kleineren Einschub ist aber verhältnismäßig kostspielig und umständlich. Dieses Problem wird noch dadurch verstärkt, dass für unterschiedlich hohe Einschübe unterschiedlich hohe Einzeladapter vorzusehen sind.

Aus der De 195 113 49 C1 ist ein Schaltschrank bekannt, der eine Mehrzahl von Feldsammelschienen aufweist, die sich im wesentlichen über die gesamte Höhe des Schaltschrankes erstrecken.

### KURZE ZUSAMMENFASSUNG DER ERFINDUNG

Zur Vermeidung dieser Probleme wird ein Adapter vorgeschlagen, in den sich, nach Art eines Schaltschrankes, mehrere Einschube gleichzeitig einschieben lassen. Zu diesem Zweck weist der Adapter seinerseits Adaptersammelschienen auf, die vertikal in dem Adapter angeordnet sind und sich im wesentlichen über die gesamte Höhe des Rahmens des Adapters erstrecken.

Hierdurch ist es möglich, durch Einschieben eines Adapters in den Schaltschrank eine Mehrzahl von weniger tiefen Einschüben in derselben Art und Weise in den Adapter einzuschieben, wie die tieferen Einschübe in den Schaltschrank eingeschoben werden.

Das Erfordernis umständlicher Einzeladapter für Einschübe von geringerer Tiefe entfällt hierdurch. Da die Verwendung des Adapters somit verhältnismäßig einfach ist, kann somit Zeit und Geld gespart werden.

### KURZE BESCHREIBUNG DER FIGUREN

Figuren 1 bis 3 zeigen jeweils eine perspektivische Darstellung des Rahmens eines Schaltschrankes in den verschiedene Komponenten des Schaltschrankes eingebaut sind.

Figur 4 ist eine perspektivische Darstellung eines Feldsammelschienenhalters und eines Isolierteils.

Figur 5 zeigt eine Mehrzahl von Feldsammelschienen, die an Isolierteilen und Feldsammelschienenhaltern angeordnet sind.

Figur 6 zeigt eine Feldsammelschienenanordnung.

Figur 7 ist eine perspektivische Darstellung eines Einschubs von zwei Seiten.

Figur 8 ist eine perspektivische Darstellung eines Adapters von zwei Seiten.

Figur 9 ist eine perspektivische Darstellung zweier Montageelement.

Figur 10 ist eine Explosionsdarstellung eines Montageelementes zusammen mit einem Zwischenblech und einem Einschub.

Figur 11 ist eine perspektivische Darstellung der Elemente von Figur 10 im zusammengebauten Zustand.

### DETAILLIERTE BESCHREIBUNG DER ERFINDUNG

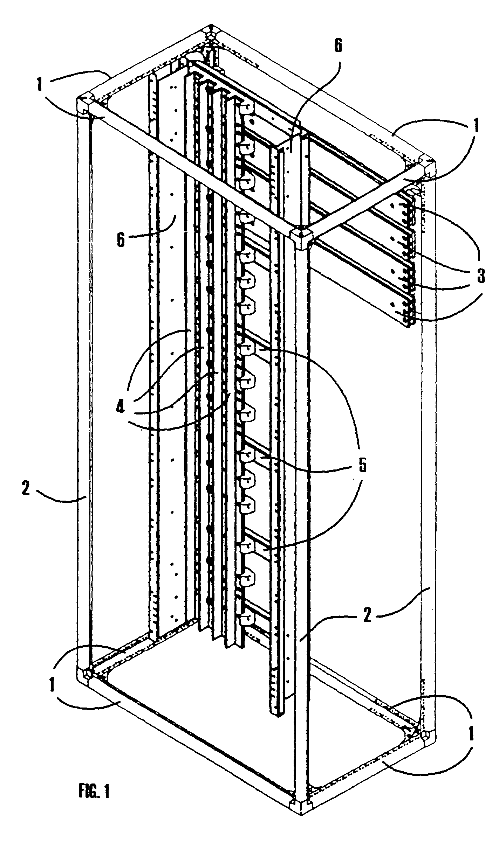

Die Figur 1 zeigt einen quaderförmigen Rahmen eines Schaltschrankes mit acht Streben 1 und vier Stützen 2. Jeweils vier Streben 1 bilden eine rechteckige Unter- bzw. Oberseite des Rahmens, zwischen dessen Eckpunkten jeweils die Stützen 2 verlaufen. Die Streben 1 und die Stützen 2 bestehen aus Stahlprofilen, die in den acht Ecken des Rahmens mittels an sich bekannter Eckelemente miteinander verbunden sind.

An der Rückseite des Rahmens sind vier Hauptsammelschienen 3 angeordnet, die horizontal verlaufen. Über diese Hauptsammelschienen 3 erfolgt die Stromzufuhr zu dem Schaltschrank.

Mit den Hauptsammelschienen 3 verbunden sind vier Stromzuführungselemente in Form von Feldsammelschienen 4, die sich vertikal im wesentlichen über die gesamte Höhe des Schaltschrankes erstrecken. Jede Feldsammelschiene 4 ist elektrisch mit einer Hauptsammelschiene 3 verbunden. Die Feldsammelschienen 4 werden von einer Mehrzahl von Feldsammelschienenhalter 5 gehalten. Die Feldsammelschienenhalter 5 sind mit zwei seitlichen Wandelementen 6 verbunden. Das linke Wandelement 6 ist oben und unten mit der oberen linken Strebe 1 und der unteren linken Strebe 1 verbunden. Die Feldsammelschienenhalter 5 bilden zusammen mit den Wandelementen 6 einen Feldsammelschienenträger.

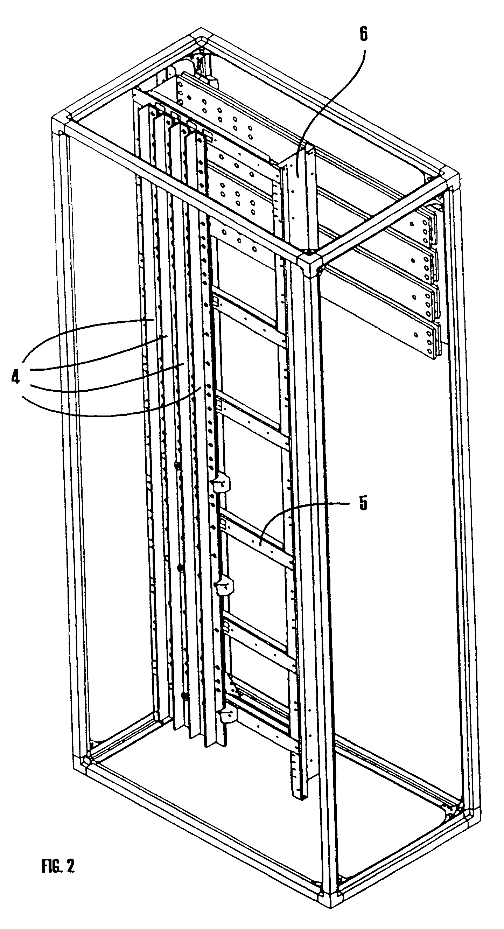

In Figur 1 sind die Feldsammelschienenhalter 5 an den hinteren Kanten der seitlichen Wandelemente 6 angeordnet. Diese Einbauposition ist für große Einschübe vorgesehen. In der Figur 2 sind die Feldsammelschienenhalter dagegen an den vorderen Kanten des seitlichen Wandelementes 6 angeordnet. Diese Einbauposition ist für kleinere Einschübe vorgesehen. In den beiden Einbaupositionen sind unterschiedliche Verbindungselemente zur Verbindung der Hauptsammelschienen 3 mit den Feldsammelschienen 4 erforderlich. Ansonsten stimmt der Schaltschrank nach Figur 1 mit dem Schaltschrank nach Figur 2 überein.

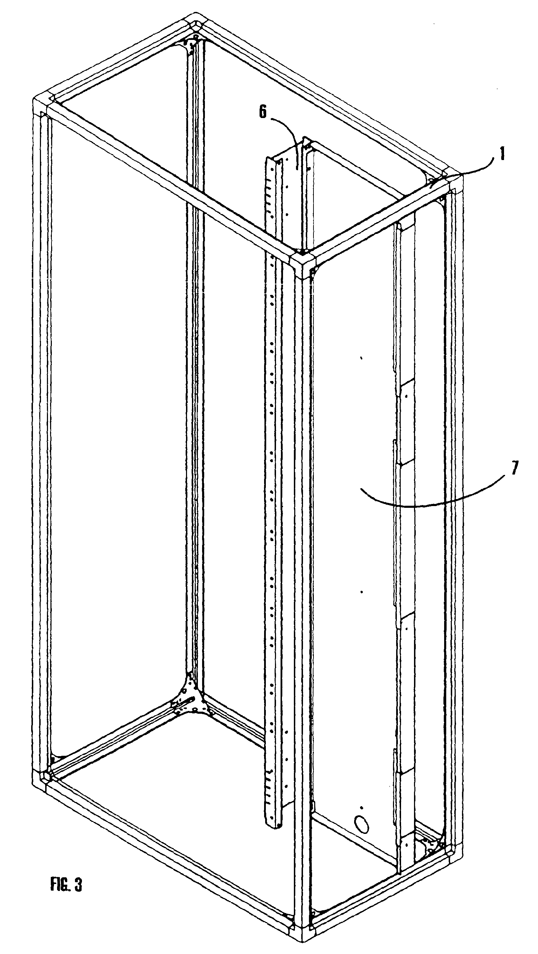

Die Figur 3 zeigt wiederum denselben Schaltschrank wie die Figuren 1 und 2. Wie aus Figur 3 ersichtlich, ist ein Trennblech 7 zwischen dem rechten Wandelement 6 und der rechten oberen Strebe 1 und der linken unteren Strebe 1 angeordnet.

Das Trennblech 7 und der Feldsammelschienenträger teilen den Innenraum des Schaltschrankes in drei Bereiche auf. Hinter dem Trennblech 7 und dem Feldsammelschienenträger befindet sich der Sammelschienenraum, vor dem Trennblech 7 befindet sich der Kabelanschlussraum und vor dem Feldsammelschienenträger befindet sich der Geräteraum.

### Anordnung der Feldsammelschienen

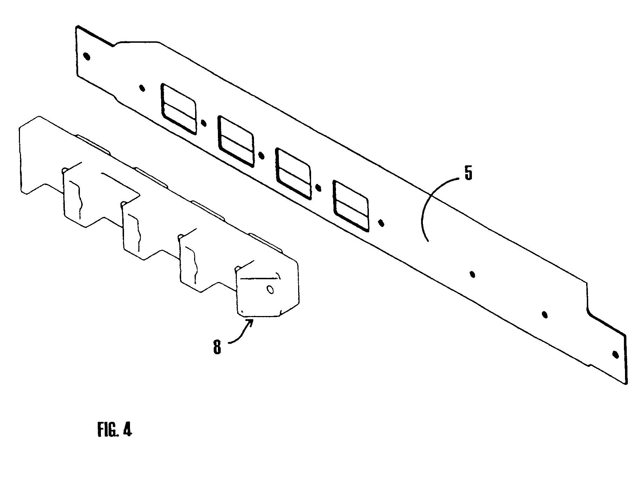

Die Figur 4 zeigt einen Feldsammelschienenhalter 5 und ein kammformiges Isolierteil 8. Das Isolierteil besteht aus Kunststoff und weist eine hohe mechanische Stabilität sowie gute Isolationseigenschaften auf. Das Isolierteil 8 dient zur isolierenden Anordnung der Feldsammelschienen 4 an den Feldsammelschienenhaltern 5 und als Distanzelement zwischen den Feldsammelschienen 4. Zwischen jedem Feldsammelschienenhalter 5 und den Feldsammelschienen 4 ist jeweils ein Isolierteil 8 angeordnet. Die Feldsammelschienen 4 werden mit Schrauben an den Isolierteilen 8 befestigt. Die Isolierteile 8 werden mit anderen Schrauben an den Feldsammelschienenhaltern 5 befestigt. Die jeweiligen Schraubenverbindungen berühren einander nicht.

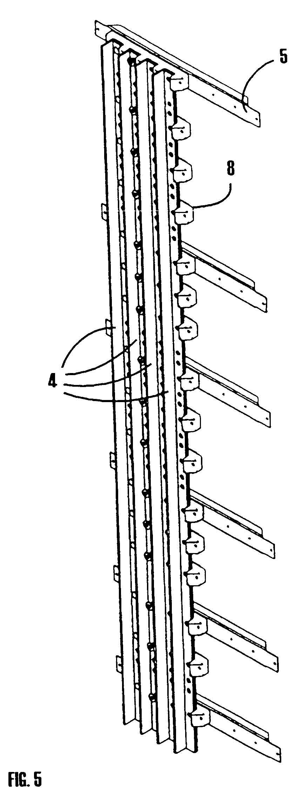

Wie aus Figur 5 ersichtlich, können aber mehr Isolierteile 8 als Feldsammelschienenhalter 5 vorgesehen sein. Die Anzahl der vorzusehenden Isolierteile 8 richtet sich nach der Stärke der in den Feldsammelschienen 4 auftretenden Ströme. Entsprechend der auftretenden Ströme wirken zwischen den Feldsammelschienen 4 Kräfte, die die Feldsammelschienen 4 zusammen- oder auseinanderdrücken. Wird der Schaltschrank nachträglich umgerüstet, können eine entsprechende Anzahl von Isolierteilen 8 nachträglich eingebaut werden, ohne dass der Schaltschrank vollständig demontiert werden muss.

Dies wird durch die kammförmige Gestalt der Isolierteile 8 erreicht, die es ermöglicht, die Feldsammelschienen 4 von hinten durch den Sammelschienenraum mit Isolierteilen 8 nachzurüsten.

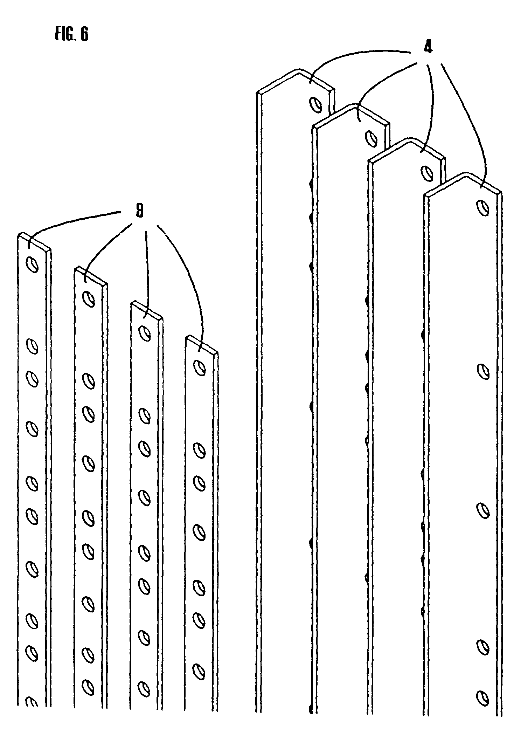

Die Figur 6 zeigt vier Stromzuführungselemente in Form von L-förmigen Feldsammelschienen 4 sowie vier Stromzuführungselemente in Form von flachen Feldsammelschienen 9. Die L-formigen Feldsammelschienen 4 und die flachen Feldsammelschienen 9 bestehen aus Kupfer. Die L-förmigen Feldsammelschienen 4 sind jeweils für eine Stromstärke von 1000 A vorgesehen, während die flachen Feldsammelschienen 9 jeweils für Stromstärken von 300 A vorgesehen sind.

Die flachen Feldsammelschienen 9 lassen sich mit den L-förmigen Feldsammelschienen 4 kombinieren, indem eine beliebige Kombination von Feldsammelschienen in den Isolierteilen 8 nach Figur 4 angeordnet und mit Schrauben zusammengefasst werden. Zu diesem Zweck weisen die flachen Feldsammelschienen 9 eine Breite auf, die der inneren Breite der L-förmigen Feldsammelschienen 4 entspricht. Darüber hinaus weisen die flachen Feldsammelschienen 9 dieselbe Lochung wie die L-förmigen Feldsammelschienen 4 auf.

Wird der Schaltschrank für 300 A oder 600 A ausgelegt, werden ein bzw. zwei flache Feldsammelschienen 9 verwendet, wird der Schaltschrank für 1000 A ausgelegt, wird nur eine L-förmige Feldsammelschiene 4 verwendet, während eine L-förmige Feldsammelschiene 4 und eine bzw. zwei flache Feldsammelschienen 9 verwendet werden, wenn der Schaltschrank für 1300 A bzw. 1600 A ausgelegt wird.

Werden nur flache Feldsammelschienen 9 verwendet, ist das Isolierteil so gestaltet, dass die flachen Feldsammelschienen 9 mit ihrer schmalen Längsseite in Richtung Geräteraum stehen.

### Adapter

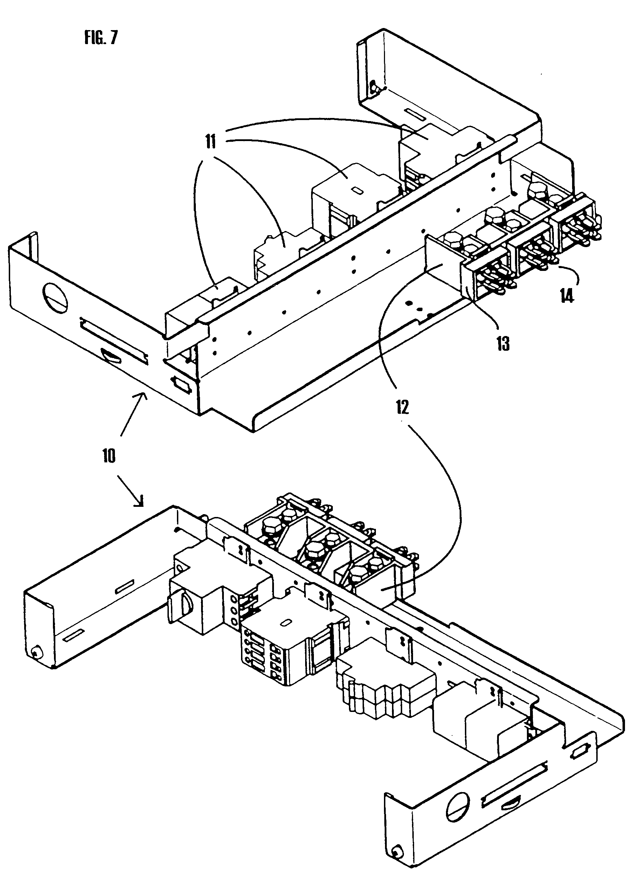

Die Figur 7 zeigt zwei perspektivische Ansichten eines Einschubs 10. In dem Einschub 10 sind eine Mehrzahl von Baugruppen 11 untergebracht. Auf der Rückseite des Einschubs 10 ist ein Verbindungselement 12 angeordnet. Das Verbindungselement 12 dient zur elektrischen Verbindung des Einschubs 10 mit den Feldsammelschienen 4 und weist drei Steckelement 13 auf. Jedes Steckelement 13 hat vier Zungen 14. Die vier Zungen 14 eines Steckelements 13 sind in zwei Spalten mit jeweils zwei Zungen 14 angeordnet. Die Steckelemente 13 sind derart an dem Einschub 10 angeordnet, dass beim Einschieben des Einschubs 10 in den Schaltschrank zwei Zungen 14 eines Steckelementes 13 links und zwei Zungen 14 eines Steckelementes 13 rechts an dem in Richtung des Geräteraumes ragenden Schenkels der Feldsammelschienen 4, 9 zur Anlage kommen.

Um einen guten Übergangswiderstand zu erreichen, sind dabei die Zungen 14 der Steckelement 13 derart angeordnet, dass der in Richtung des Gerateraumes ragende Schenkel der Feldsammelschienen 4 fest zwischen den Zungen eingeklemmt wird.

Die in Figur 7 gezeigten Einschübe 10 gibt es in verschiedenen Größen, die sich hinsichtlich der Höhe und der Tiefe des Einschubs 10 unterscheiden. Auch gibt es oben und unten offene Einschübe 10, wie in Figur 7 gezeigt, und vollständig geschlossene Einschübe 10. Sind für einen Schaltschrank ausschließlich Einschübe 10 mit einer geringen Tiefe vorgesehen, werden die Feldsammelschienenhalter 5 in der in Figur 2 gezeigten Position an den Wandelementen 6 befestigt. Sind dagegen für einen Schaltschrank ausschließlich Einschübe 10 mit einer großen Tiefe vorgesehen, werden die Feldsammelschienenhalter 5 in der aus Figur 1 ersichtlichen Position an den Wandelementen 6 befestigt. Sind für einen Schaltschrank Einschübe unterschiedlicher Größe vorgesehen, so werden die Feldsammelschienenhalter 5 ebenfalls in der aus Figur 1 ersichtlichen Position angeordnet, wobei dann für jeden kürzeren Einschub 10 ein Adapter zwischen dem Einschub 10 und dem Feldsammelschienen 4 erforderlich ist.

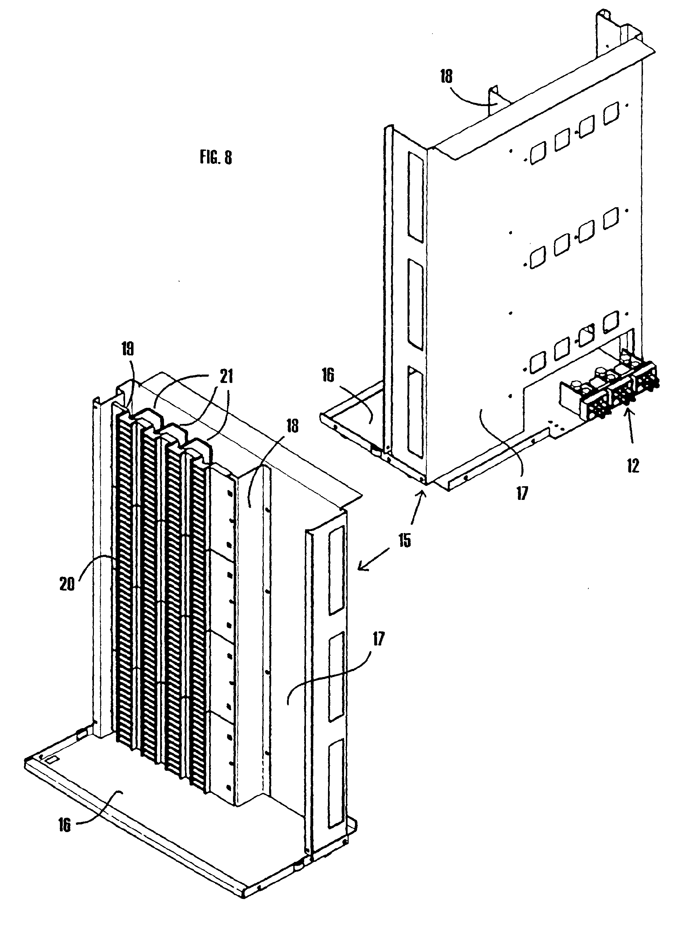

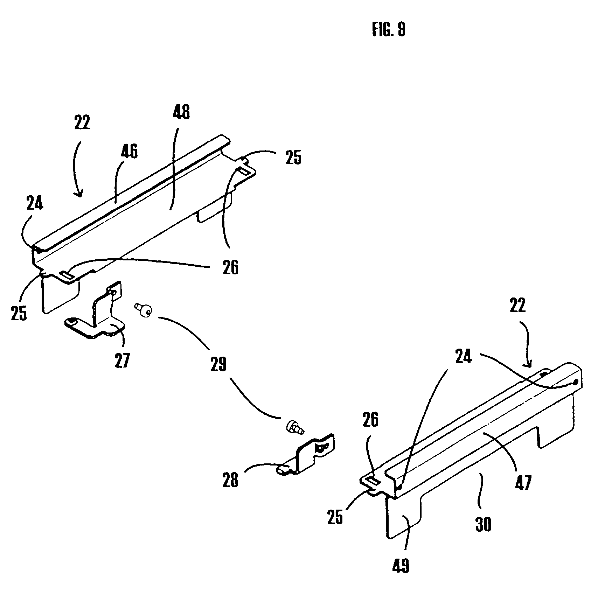

Die Figur 8 zeigt eine perspektivische Darstellung eines Adapters 15 in einer Darstellung aus zwei Richtungen. Der Adapter 15 wird wie ein Einschub 10 in den Geräteraum des Schaltschrankes eingeschoben und weist auf der Rückseite ein Verbindungselement 12 auf. Der Adapter 15 hat eine Grundplatte 16, einen U-förmigen Rahmen 17 und ein in dem Rahmen angeordnetes Stützteil 18. Die Elemente 16, 17 und 18 sind aus Stahlblech gefertigt. Zwischen dem Stützteil 18 und einem linken Wandabschnitt des Rahmens 17 ist ein Fingerschutzelement 19 aus Kunststoff angeordnet. Das Fingerschutzelement 19 weist eine Vielzahl von Schlitzen 20 auf.

Hinter dem Fingerschutzelement 19 sind eine Mehrzahl von Adaptersammelschienen 21 angeordnet, die im eingebauten Zustand des Adapters 15 über das Verbindungselement 12 mit den Feldsammelschienen 4 verbunden sind, und von dem Fingerschutzelement 19 vollständig abgedeckt werden.

In den Adapter 15 nach Figur 8 kann eine Mehrzahl von kleinen Einschüben 10 eingesetzt werden. Die Schlitze 20 des Fingerschutzelementes 19 sind derart angeordnet, dass die Zungen 14 der Steckelemente 13 durch das Fingerschutzelement 19 hindurch die in den Geräteraum ragenden Schenkel der ebenfalls L-förmigen Adaptersammelschienen 21 umgreifen bzw. kontaktieren können. Die Adaptersammelschienen 21 bestehen wie die Feldsammelschienen 4 aus Kupfer und weisen von der Länge abgesehen dieselben Abmaße wie die Feldsammelschienen 4 auf. Die Länge der Adaptersammelschienen 21 ist geringfügig geringer als die Höhe des Adapters 15. Durch die Anordnung des Fingerschutzelementes 19 lässt sich zum einen der Adapter 15 unter Spannung in den Schaltschrank einsetzen und zum anderen die Einschübe 10 unter Spannung in den Adapter 15 einsetzen.

Durch die Verwendung des in Figur 8 gezeigten Adapters 15 wird eine Verwendung von Einzeladaptern pro Einschub überflüssig.

### Montagesystem

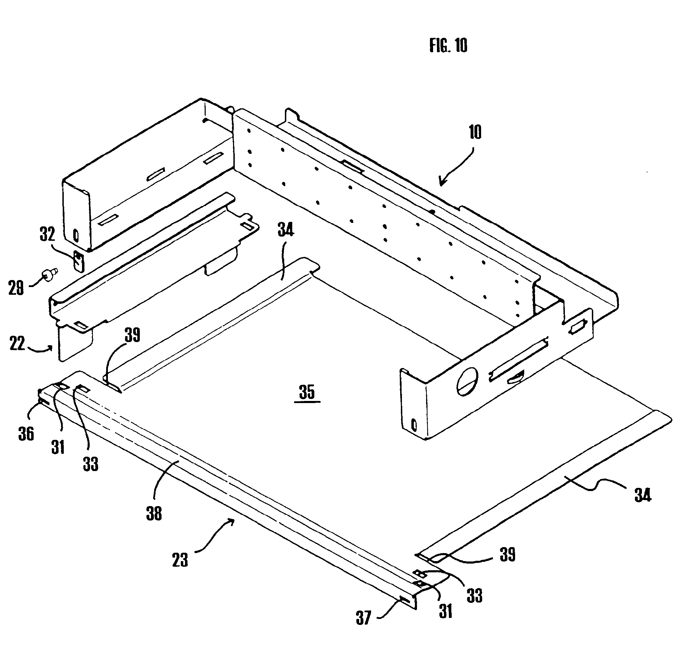

Die Figur 9 zeigt zwei längliche, profilierte Montagelemente 22 zur Lagerung von Einschüben oder einem Adapter und zur Anordnung von Zwischenblechen 23 in perspektivischer Darstellung. Die Montagelemente 22 bestehen aus Stahlblech und können nach entsprechender Verdrehung links oder rechts im Geräteraum angeordnet werden, d.h. das linke und rechte Montagelement 22 nach Figur 9 sind identisch. Das Montagelement 22 weist einen oberen Abschnitt mit einem ersten horizontalen Abschnitt 48, einem zweiten horizontalen Abschnitt 46 und einem ersten vertikalen Abschnitt 47 sowie einen unteren Abschnitt mit einem zweiten vertikalen Abschnitt 49 auf.

Der untere Abschnitt 49 erstreckt sich im wesentlichen rechteckig und hat an seiner Unterseite eine Ausnehmung 30. Durch die Ausnehmungen 30 bleiben Anschlusselemente zugänglich, die sich an der Seite eines unter dem Montagelement 22 angeordneten Einschubs 10 befinden können. Der untere Abschnitt 49 dient zur elektrischen und mechanischen Abschirmung des unter dem Montagewinkels liegenden Einschubes 10.

Der obere Abschnitt 46, 47, 48 hat im wesentlichen die Form eines liegenden U, wobei der untere Schenkel 48 des U-förmigen oberen Abschnittes länger als der obere Schenkel 46 ist. Der obere Schenkel 46 dient zur Lagerung des Einschubes 10, während der untere Schenkel 48 zur Lagerung des Zwischenbleches 23 dient. Der untere Schenkel 48 weist darüber hinaus an beiden Enden jeweils ein Langloch 26 und einen Vorsprung 25 auf. Das Langloch 26 dient zur Verriegelung des Zwischenbleches 23 sowie des Einschubes 10. Die hinteren Vorsprünge 25 dienen zur Befestigung der Montagelemente 22 in entsprechenden, in der Figur 1 und 2 nicht gezeigten schrägen Schlitzen der Wandelemente 6, wohingegen die vorderen Vorsprünge in entsprechende Langlöcher 31 der Zwischenbleche 23 eingreifen.

Zwischen den beiden Schenkeln des U-förmigen oberen Abschnittes des Montagelementes 22 befindet sich die Basis 47 des U. In dieser Basis 47 sind Befestigungslöcher 24 vorgesehen. Mit Hilfe dieser Befestigungslöcher 24 werden die vorderen Teile der Montagelemente 22 an der linken vorderen Stütze 2 nach Figur 1 und einer Stütze befestigt werden, die in der Figur 1 nicht gezeigt ist und die an der Grenze zwischen dem Geräteraum und dem Kabelanschlussraum zwischen der vorderen oberen und der vorderen unteren Strebe 1 verlauft.

Schließlich sind in der Figur 9 noch ein Scharnierelement 27 und ein Verriegelungselement 28 gezeigt. Diese beiden Element weisen einen Abschnitt auf, der zwischen den oberen und den unteren Schenkeln 46, 48 des U-förmigen oberen Abschnittes des Montagelementes 22 passt. Dieser Abschnitt weist ein Loch auf, durch das Befestigungsschrauben 29 zur Befestigung der Montagelement 22 geführt werden; so dass die beiden Elemente 27 und 28 gleichzeitig mit den Montagelementen 22 an den entsprechenden Stützen befestigt werden.

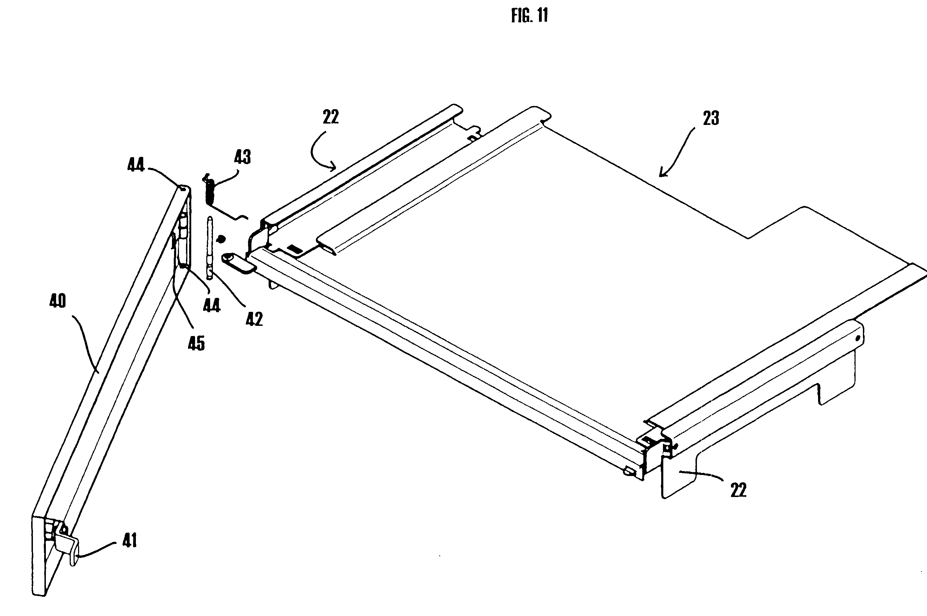

Die Figur 10 zeigt das Zwischenblech 23 zusammen mit einem Montagelement 22 und einem Einschub 10 ohne Baugruppen 11 und ohne Verbindungselement 12. Das Zwischenblech 23 weist links und rechts einer Grundplatte 35 seitliche Abschnitte 34 sowie vorne einen vorderen Abschnitt 38 auf.

Die seitlichen Abschnitte 34 sind zu der Grundplatte 35 parallel und erhöht. Die Hinterkante der seitlichen Abschnitte 34 ist zu der Hinterkante der Grundplatte 35 parallel. Die Vorderkante der seitlichen Abschnitte 34 ist von dem vorderen Abschnitt 38 des Zwischenbleches 23 beabstandet. Zwischen der Vorderkante der seitlichen Abschnitte 34 und der Grundplatte 35 befindet sich ein Schlitz 39. Der Abstand zwischen der Unterseite eines seitlichen Abschnittes 34 und der Oberseite der Grundplatte 35, also die Höhe des Schlitzes 39, entspricht im wesentlichen der Stärke des unteren Schenkels 48 des oberen Abschnittes des Montagelementes 22. Die inneren Längsseiten der seitlichen Abschnitte 34 sind mit der Grundplatte 35 verbunden.

In der Nähe des vorderen Abschnittes 38 sind im Randbereich der Grundplatte jeweils Langlöcher 33 vorgesehen. Im zusammengebauten Zustand liegend die Langlöcher 33 des Zwischenbleches 23 unter den Langlöchern 26 der Montagelemente 22. Ein mittels einer Befestigungsschraube 29 an dem Einschub 10 angeschraubtes Sicherungselement 32 ragt dann durch die beiden Langlöcher 26, 33, so dass gleichzeitig der Einschub 10 und das Zwischenblech 23 gegenüber dem Montagelement 22 gesichert sind.

Im vorderen Abschnitt 38 des Zwischenbleches 23 verläuft das Zwischenblech 22 über seine gesamte Länge schräg nach oben. In der schrägen Fläche dieses Abschnittes sind ebenfalls an den seitlichen Rändern des vorderen Abschnittes 38 Offnungen 31 vorgesehen. Die Öffnungen 31 sind nun derart angeordnet, dass die Vorsprünge 25 der Montagelemente 22 in die Öffnungen 31 eingreifen, wenn das Zwischenblech 23 vollständig in den Schaltschrank eingeschoben ist.

An die schräge Fläche schließt sich ein weiterer Abschnitt an, der parallel zur Grundplatte 35 verläuft, gegenüber dieser aber erhöht ist. An diesen parallelen Abschnitt schließt sich schließlich ein Endabschnitt des vorderen Abschnittes 38 an, der von dem parallelen Abschnitt an vertikal nach unten verläuft. Am linken Rand dieses vertikalen Endabschnittes ist ein Schlitz 36 vorgesehen, während beabstandet vom rechten Rand ein Langloch 37 vorgesehen ist.

Wie aus Figur 11 ersichtlich, dient der linke Schlitz 36 zur Durchführung des Scharnierelementes 27 während das rechte Langloch 37 zur Durchführung des Verriegelungselementes 28 dient.

Aus der Figur 11 weiterhin ersichtlich ist eine Tür 40, ein Schloss 41, eine Achse 42, eine Feder 43 und zwei Montagelocher 44. Zur Befestigung der Tür 40 an dem Scharnierelement 27 wird die Tür 40 mit dem Befestigungsteil 45 an des Scharnierelement gehalten. Dann wird die Feder 43 geeignet positioniert und die Achse 42 von oben durch das obere Loch 44, durch die Feder 43, durch das obere Teil des Befestigungselementes 45, durch das Scharnierelement 27, durch den unteren Teil des Befestigungselementes 45 und durch das untere Loch 44 eingeschoben. Die Lage der Achse 42 wird schließlich durch einen Sprungring am Befestigungselement 45 gesichert. Hierzu weist die Achse 42 eine Nut auf. Durch die Anordnung der Feder 43 lässt sich die Ruhelage der Tür 40 als grundsätzlich offen festlegen. Die geschlossene Tür 40 kann mittels dem Schloss 41 an dem Verriegelungselement 28 verriegelt werden.

Der Zusammenbau des Schaltschrankes geschieht nun wie folgt.

Zuerst wird der in den Figuren 1 bis 3 gezeigte Rahmen mit den acht Streben und den vier Stützen zusammengesetzt.

Daraufhin erfolgt der Einbau der Hauptsammelschienen 3.

Als nächstes werden die zwei Wandelemente 6, das Trennblech 7 und die Feldsammelschienenhalter 5 eingebaut.

Je nach dem, welche Einschübe für den Schaltschrank vorgesehen sind, werden die Feldsammelschienenhalter 5 am vorderen oder hinteren Rand der Wandelemente 6 angebracht.

Auf den Feldsammelschienenhaltern 5 werden die Isolierteile 8 angeordnet, woraufhin die Stromzuführungselemente 4, 9 in den Isolierteilen 8 angeordnet und verschraubt werden. Je nach Bedarf werden die Stromzuführungselemente durch ein oder mehrere Feldsammelschienen 4, 9.

Daraufhin erfolgt er Einbau einer Stütze zwischen der vorderen oberen Strebe 1 und der vorderen unteren Strebe 2 an der Grenze zwischen dem Geräteraum und dem Kabelanschlussraum.

Nun werden die Montagelemente 22 mit ihren hinteren Vorsprüngen 25 in schräg verlaufende Schlitze der Wandelemente 6 eingesetzt und vorne an den Streben zusammen mit dem Scharnierelement 27 bzw. dem Verriegelungselement 28 angeschraubt.

Soweit erforderlich, werden jetzt die Zwischenbleche 23 eingesetzt. Dabei werden sie mit den seitlichen Abschnitten 34 auf die unteren Schenkel bzw. ersten horizontalen Abschnitte der Montagelemente 22 aufgelegt und in den Schaltschrank eingeschoben, so dass im vollständig eingeschobenen Zustand der vordere Teil der Grundplatte 35 unter dem unteren Schenkel bzw. dem ersten horizontalen Abschnitt 48 angeordnet ist, der horizontale Abschnitt 48 als in den Schlitz 39 ragt, die vorderen Vorsprünge 25 der Montagelemente 22 in die Öffnungen 31 der Zwischenbleche 23 eingreifen, die vorderen Langlöcher 26 der Montagelemente 22 mit den Langlöchern 33 des Zwischenbleches 23 fluchten und die hinteren Ecken der Zwischenbleche 23 in hierfür vorgesehen Schlitze an in den Figuren ebenfalls nicht gezeigten Elementen des Schaltschrankes eingreifen.

Sollte die Verwendung eines Adapters für den aufzubauenden Schaltschrank erforderlich sein, wird dieser selbstverständlich nach der Anordnung der Montagelemente 22 und vor dem Einsetzen der Zwischenbleche 23 in den Schaltschrank eingesetzt, wobei dabei die Grundplatte 16 auf dem oberen Schenkel bzw. dem zweiten horizontalen Abschnitt des Montageelementes 22 gelagert wird.

Nach dem Einbau der Zwischenbleche 23 und des Adapters 15 an die dafür vorgesehenen Positionen werden nun die Einschübe 10 in den Schaltschrank eingesetzt, wobei sie einerseits beim Einschieben die Feldsammelschienen kontaktieren und zum anderen auf den oberen Schenkeln bzw. den zweiten horizontalen Abschnitten der Montagelemente 22 gelagert werden.

Nach dem Einschieben der Einschübe 10 werden die Sicherungselemente 32 durch die Langlöcher 26 bzw. 33 der Montagewinkel 22 bzw. Zwischenbleche 23 geschoben und mit Befestigungsschrauben 29 an den Einschüben 10 befestigt. Hierdurch wird gleichzeitig sowohl die Lage des Einschubs 10 als auch des eventuell vorgesehenen Zwischenbleches 23 gegenüber dem Montagelement 22 gesichert.

Schließlich erfolgt noch der Einbau der Türen, wodurch die Montage des Geräteraumes abgeschlossen ist.

Vorstehend wurde eine Möglichkeit aufgezeigt, wie die Erfindung vorzugsweise in die Praxis umgesetzt werden kann.

Jedoch sind eine Vielzahl von Abwandlungen denkbar, ohne dass der Grundgedanke der Erfindung verlassen wird.

Selbstverständlich hängt die Anzahl der verwendeten Hauptsammelschienen 3 sowie der verwendeten Stromzuführungselemente 4, 9 von der Anzahl der erforderlichen Phasen bzw. Nulleiter ab. Im Ausführungsbeispiel für den Schaltschrank werden grundsätzlich vier Haupt- und Feldsammelschienen verwendet. Selbstverständlich können es auch drei oder eine andere Anzahl sein. Auch die Anzahl der Adaptersammelschienen ist nicht auf drei beschränkt. Auch hier können vier oder jede andere Anzahl von Adaptersammelschienen verwendet werden. Die Form der Feldsammelschienen 4 ist nicht auf die gezeigte L-Form beschränkt. Grundsätzlich können auch anders profilierte Feldsammelschienen verwendet werden. Wichtig ist lediglich, dass die Feldsammelschienen 4 von den Einschuben 10 bzw. dem Adapter 15 kontaktiert werden können.

Bei der Verwendung von L-förmigen Feldsammelschienen 4 ergibt sich jedoch der Vorteil, dass diese ohne weiteres sehr leicht aus herkömmlichem Flachkupfer durch Biegen hergestellt werden können.

Die in Figur 6 gezeigten flachen Feldsammelschienen 9 weisen alle dieselbe Stärke auf. Dies hat den Vorteil, dass die Anzahl der zur Verfügung zu stellenden Bauteile verhältnismäßig gering ist. Selbstverständlich können aber auch unterschiedlich starke Feldsammelschienen 9 einzeln oder in Kombination mit den Feldsammelschienen 4 verwendet werden.

Auch können die Feldsammelschienen 4, 9 für andere Stromwerte als die oben genannten ausgelegt werden.

In der Figur 8 wird lediglich ein Adapter mit einer bestimmten Höhe gezeigt. Grundsätzlich ist es aber möglich, Adapter mit unterschiedlicher Höhe zur Verfügung zu stellen, wobei dann die Höhe des Adapters entsprechend der Anzahl der in den Adapter einzusetzenden Einschübe gewählt werden kann.

Das in der Figur 9 gezeigte Montagelement muss nicht zwangsweise die Langlöcher 26 aufweisen. Selbstverständlich kann auch ein anderer Sicherungsmechanismus verwendet werden. Die gezeigte Sicherung mit Hilfe des Sicherungselementes 32 hat jedoch den Vorteil, dass mit Hilfe eines einzigen Elementes gleichzeitig ein Einschub 10 und ein Zwischenblech 23 gegenüber dem Montagelement 22 gesichert werden können.

Auch können wahlweise entweder ein oder zwei Sicherungselemente 32 vorgesehen sein.

Gezeigt wird ein Adapter 15 für einen Schaltschrank mit einem Rahmen 17, in dem eine Mehrzahl von Adaptersammelschienen 21 vertikal angeordnet sind, die sich im wesentlichen über die gesamte Höhe des Rahmens erstrecken. Dieser Adapter kann wie ein Einschub in einen Schaltschrank eingeschoben werden, woraufhin die entsprechenden Einschübe in derselben Art und Weise in den Adapter eingeschoben werden können, wie Einschube, die ohne Adapter in den Schaltschrank passen.

## Patentansprüche

1. Adapter für einen Schaltschrank, der eine Mehrzahl von Feldsammelschienen (4) aufweist, die sich im wesentlichen über die gesamte Höhe des Schaltschrankes erstrecken,
wobei der Adapter einen Rahmen (17) aufweist, in dem eine Mehrzahl von Adaptersammelschienen (21) vertikal angeordnet sind, die sich im wesentlichen über die gesamte Höhe des Rahmens erstrecken.

2. Adapter nach Anspruch 1, **dadurch gekennzeichnet, dass** eine Grundplatte (16) vorgesehen ist, auf der der Rahmen angeordnet ist und mittels der der Adapter (15) nach Art eines Einschubs in dem Schaltschrank angeordnet werden kann.

3. Adapter nach Anspruch 1 oder 2, **dadurch gekennzeichnet**,
dass ein Fingerschutzelement (19) vorgesehen ist,
das die Adaptersammelschienen von vorne abdeckt, und
das eine Mehrzahl von Schlitzen (20) aufweist, durch die in dem Adapter angeordnete Einschübe (10) die Adaptersammelschienen kontaktieren können.

4. Adapter nach einem der vorhergehenden Ansprüche, **dadurch gekennzeichnet, dass** auf der Rückseite des Adapters ein Verbindungselement (12) angeordnet ist, das beim Einschieben des Adapters in den Schaltschrank die Feldsammelschienen (4, 9) des Schaltschrankes kontaktiert und das in dem Adapter mit den Adaptersammelschienen verbunden ist.

5. Adapter nach Anspruch 4 oder 5, **dadurch gekennzeichnet**,
dass in dem Rahmen ein Stützteil (18) angeordnet ist, und
dass das Fingerschutzelement zwischen dem Stützteil und einem seitlichen Wandabschnitt des Rahmens angeordnet ist.
